Europäisches Patentamt

(19) European Patent Office

Office européen des brevets

(11) Publication number: **0 183 750**
**B1**

(12) **EUROPEAN PATENT SPECIFICATION**

(45) Date of publication of the patent specification:
08.06.88

(51) Int. Cl.⁴: **B 65 G 47/10**, B 65 G 1/06

(21) Application number: **85902549.6**

(22) Date of filling: **13.06.85**

(86) International application number:
**PCT/FI 85/00050**

(87) International publication number:
**WO 86/00062 (03.01.86 Gazette 86/01)**

(54) **SORTING AND WAITING STORAGE SYSTEM FOR PERISHABLE GOODS COMING FROM PRODUCTION FOR DELIVERY AND PACKED IN TRANSPORT BOXES.**

(30) Priority: **13.06.84 FI 842392**

(43) Date of publication of application:
**11.06.86 Bulletin 86/24**

(45) Publication of the grant of the patent:
**08.06.88 Bulletin 88/23**

(84) Designated Contracting States:
**AT BE CH DE FR GB IT LI NL SE**

(56) References cited:
**FI-B-58 314**
**FI-C-33 618**
**GB-A-1 443 231**
**SE-B-420 822**
**US-A-3 661 284**
**US-A-3 937 335**
**US-E-27 152**

(73) Proprietor: **TEKNILLINEN TOIMISTO ESKO SALO KY, SF- 61800 Kauhajoki (FI)**

(72) Inventor: **ALANCO, Lars- Erik, Pihlajakuja 5, SF- 61800 Kauhajoki (FI)**

(74) Representative: **Magnusson, Gustav, MAGNUPATENT Gustav Magnusson AB P.O. Box 6207, S-200 11 Malmö 6 (SE)**

EP 0 183 750 B1

## Description

The present invention is related to a method of assembling delivery loads as stated in the preamble of claim 1.

A typical example of the production of the sort concerned is confectionery, which is produced for a large number of customers. In order to provide a rapid and efficient delivery to the customers, the products concerned are delivered to the customers by means of relatively small transport vehicles, and the transport routes are divided optimally for each transport vehicle. In such a case, the transport vehicles may drive through their delivery routes several times per day in accordance with certain delivery schedules. However, in order that it should be possible to follow the delivery schedules, it is necessary that, when a transport vehicle arrives at the starting point, there is a load ready waiting for it, which said load is grouped in accordance with the delivery points on the route and with the orders of the customers located at the various delivery points and which load is provided with consignment notes prepared for each customer, the transport capacity of the transport vehicle being additionally taken into account optimally in the grouping of the said load.

For this purpose, various intermediate storage or waiting storage and sorting systems have been developed, a tyical feature of all of which is, however, quite high requirements of human labour since man performs assembly and sorting of loads as an essential component in the systems. Thus, at decisive points, these systems involve the "human factor", which results in errors and deficiencies in the consignment as well as in operational slowness, which restricts the capacity. The said prior-art sorting and storage systems work tolerably well as an extension of production processes of the sort in which a few different products are produced and, moreover, delivered as large quantities to each customer, whereby several transport boxes at a time may be used as a measure for such quantities. As an example in the field of bakery products might be mentioned loaves of bread.

In these prior-art systems, the loaves coming from each bread oven are packed at the end of the oven into transport boxes, e.g. so and so many loaves per box. The packed boxes proceed as lines of their own to the sorting stage, where a person picks up the necessary number of boxes out of the line of each line of bread in accordance with the order of the customer, and, of these boxes, forms stacks containing at the maximum a certain number of boxes for transportation, and provides the line of stacks destined to each customer with a consignment note. In addition to this, the system may include equalizing devices placed after the sorting stage, which said devices rearrange the stacks that have remained lower that the maximum number of boxes to full-height transport stacks so as to utilize the maximum capacity of the transportation unit. An alternative possibility may be that the driver carries out the said equalizing when he loads his transport vehicle. This, however, makes the performance of the loading stage a great deal slower.

However, expressly when confectionery products are concerned, which come from the production as short successive series and as many different products sorts, and which are additionally packed into the boxes of the individual customers as even highly varying quantitites in accordance with small batch orders, man would be quite an unreliable link of limited capacity in the sorting system. The purpose of the present invention is to achieve a method wherein requirement described above are met and the drawbacks of the prior art are obviated. Thus, the present invention provides a method to assemble delivery loads, especially from confectionery products or from products coming from a process of corresponding sort, wherein, however, for man, a duty has been assigned which requires concluding of maximum simplicity in the filling of the transport boxes immediately at the production stage of the products, whereas in the method care is automatically taken of the sorting, transferring and stacking of the product boxes to make ready transport batches, without interference by man.

The task is solved by a method as diclosed in the characterizing portion of the independent claim 1. The dependent claims disclose preferred embodiments of the invention.

The invention is described in greater detail in the following with reference to a drawing showing a schematical illustration of an equipment used while practising the method.

The equipment shown includes five independent packaging stations 1, which are directly connected with the discharge ends of the product ovens, not shown. The transport boxes packed at the feed stations move onto waiting conveyors 2 belonging to the equipment, and from them further, in accordance with a traffic order regulated by a control means, onto the feed conveyors 3, of which there are two placed side by side in the embodiment shown. These feed conveyors carry the boxes to the rationing stops 4, which guide the boxes, obeying the quipment control, to the customer station conveyors 5, from which the boxes are picked up by stacking wagons 6 and lowered, still in accordance with orders given by the equipment control, to a stacking position of the various customer stations 7. From the customer stations, the stacks of boxes move to the delivery conveyors 8, and from there further to the assembly conveyor, from which the line of stacks is passed to either one of the loading stations 10. Under these circumstances, the equipment embodiment shown is provided with two levels, the change of level taking place when the boxes move from the customer station conveyors 5, transferred by the stacking wagons 6, to the stacking position in customer stations 7.

Each packaging station is provided with a monitor, which gives the number of products for each customer, each product, and for each transport box under control of the computer included in the equipment and analyzing the orders placed by the customers. If, for example, at the maximum 30 pieces of the product coming from the production line concerned can be packed into each of the identical boxes constituting parts of the transportation system and if the order of the customer comprises 40 pieces of the product concerned, after the preceding batch has been packed and delivered further onto a feed conveyor forming a part of the equipment, the number 30 appears at the monitor. The packaging person takes an empty box (cleaned after the preceding transportation cycle) from the conveyor that delivers the empty boxes and packs thirty products units into it. Hereupon he/she pushes the filled box onto the feed conveyor. At this stage, the equipment preferably includes a detector which notes the box and gives an acknowledgement signal to the control means. Hereupon, for the packaging of the rest of the delivery batch, the number 10 appears at the monitor, in compliance with which the packaging person fills 10 products into the next box and pushes the box forwards. The receipt of this box is also acknowledged and the monitor display moves over to the order data of the next customer, giving the number instruction concerning him into the monitor. A corresponding operation takes place in all the other production points as well.

After the packaging station, the acknowledged boxes move, either one by one, one after the other, or 2, 3 or any other number of boxes that is found suitable as stacked one on the other, as a line, onto the waiting conveyor, from which the lines coming from different product lines move onto the feed conveyor or possibly onto several parallel feed conveyors so as to be shifted to individual stations of each customer. The automatics of the equipment takes care that the product box lines are shifted to said customer stations in the sequence that is most advantageous in view of the capacity of the equipment.

Each of the customer stations has preferably two positions, of which the first one is a stacking position and the second one a waiting position. The boxes arriving at each customer station are stacked at the stacking position to make stacks of a specified number of boxes, e.g. 12 boxes. After a stack has become full, it is shifted to the waiting position, and the assembly of the next stack is started at the stacking position.

After the transport vehicle has come to the final end, i.e., at the same time, to the initial end of its delivery cycle, i.e. to fetch its new load for the route, the driver gives the equipment control his own call signal, e.g. by means of a terminal provided at the loading site. Thereby, the stacks placed at the customer stations start moving onto the loading conveyors in the sequence controlled by the logic of the automatics, whereby, out of the stacks destined for each customer, the full-height stack placed in the waiting position in a customer station is taken first and, thereupon, a stack present in the stacking position if it is of full height or contains at least a certain minimum number of boxes. In such a case, in view of smoothness of the delivery, it is possible to accept for transportation a stack that is, e.g., 2 or 3 boxes lower than full. By means of a printer placed at the transportation site, a consignment note is also prepared for the transport batch of each customer, which said note precisely states the factually delivered quantity of goods as well as, moreover, states that a deficiency of delivery, possibly attributable to an excessively low stack in the stacking position, will be shipped with the next delivery. In particular, in connection with the discharge of the customer stations, it should be noticed that the equipment permits the discharge of a waiting position belonging to a customer station for transport even if filling of the station were going on at the same time in the stacking position belonging to the same customer station.

According to the invention, the method also permits modification of the loads coming from the customer stations for transportation, as, on his arrival at the loading site, the person fetching the load may, by means of the terminal at the loading site, check the number of boxes that have become ready for his standard route in the customer station. If this number is clearly low as compared with the capacity of the transport vehicle, by means of the terminal he may feed into the control system an alternative route expanded over the standard route, being thereby able to utilize the transport capacity of his vehicle more efficiently. By means of the terminal, he has the possibility of also otherwise modifying his route by adding to it, e.g., small customers naturally fitting into the route, to whom goods are possibly delivered less frequently than what would be required by the standard route.

The control means also permits changing of packaging stations if a failure occurs in the packaging station of an oven in a situation in which the oven supplies ready product at a high speed and in which the operation is less intense at some other oven. Also, if one packaging station becomes congested, it is possible to use the packaging station of some other oven in order to relieve the situation if the control means has been informed accordingly.

The above example includes an application of the method in connection to the use of the disclosed equipment to deliver confectionery products, but it is evident to a person skilled in the art that the invention is also applicable to other deliveries that require speed, such as the delivery of products of sausage factories and processed food factories, as well as, for example, to large-scale delivery of daily food portions.

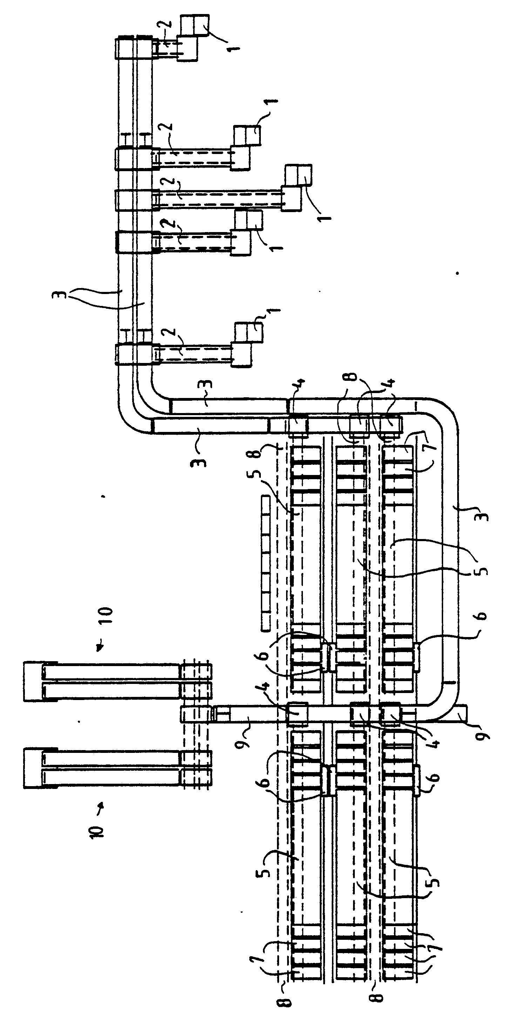

## Claims

1. Method to assemble delivery loads from goods that arrive substantially continuously and mainly simultaneously as different product types from production, in particular perishable goods, such as bakery products, wherein in packaging stations (2) each kind of goods is packed into boxes of a specified size in accordance with delivery orders placed by individual customers, characterized in that in each packaging station (2) the boxes are packed in a sequentially controlled manner, that the boxes are transferred by conveying means (3, 4, 5, 6) from each packaging station to customer stations (7) in an automatically controlled manner which adapts the transfer to the sequences of packing, that each of the customer stations is assigned to a certain customer, and that in each customer station the boxes are stacked in stacks and that by mechanical means while forming parts of said stacks the boxes are guided while being automatically controlled to a delivery station (10) to be placed in an order corresponding to the sequence of customers as they appear in the routes of delivery vehicles loading the boxes at the delivery station.

2. Method as claimed in claim 1, characterized in that the boxes are stacked to form a delivery stack containing a specified number of boxes, the stack being placed in a stacking position of the customer station, that the stack is shifted to a waiting position, and that subsequent boxes are stacked to form an additional stack in the stacking position of the customer station.

3. Method as claimed in claim 1 or 2, characterized in that the delivery stacks destined for each customer are provided with consignment notes on their transfer for delivery transport on the basis of the order data acknowledged or corrected in the product sort packaging stations (2).

4. Method as claimed in claim 2, characterized in that the boxes are transferred by the conveying means (3, 4, 5, 6) from the product sort packing stations (2) to the customer stations (7) at a higher level than the highest level reached by the delivery stack containing the specified number of boxes while in the customers station (7).

## Patentansprüche

1. Verfahren zum Zusammenstellen von Lieferungsladungen von Waren, die im wesentlichen ununterbrochen und hauptsächlich gleichzeitig als verschiedene Erzeugnistypen aus der Produktion kommen, insbesondere verderblichen Waren wie z. B. Bäckereierzeugnisse, bei dem in Packstationen (2) jede Art von Waren in Schachteln oder Kästen vorgegebener Größe in Übereinstimmung mit von einzelnen Kunden aufgegebenen Bestellungen gepackt wird, dadurch gekennzeichnet, daß in jeder Packstation (2) die Schachteln oder Kästen in kontrollierter Reihenfolge gepackt werden, daß die Schachteln oder Kästen durch Fördermittel (3, 4, 5, 6) von jeder Packstation zu Kundenstationen (7) in automatisch gesteuerter Weise transportiert werden, wobei der Transport an die Reihenfolge des Packens angepaßt wird, daß jede Kundenstation einem bestimmten Kunden zugeordnet ist, und daß in jeder Kundenstation die Schachteln oder Kästen in Stapeln gestapelt werden und daß durch mechanische Mittel beim Bilden von Teilen der Stapel die Schachteln oder Kästen unter automatischer Steuerung zu einer Lieferstation (10) geführt werden, um in einer Reihenfolge angeordnet zu werden, die der Reihenfolge der Kunden auf den Routen der Lieferfahrzeuge entspricht, die die Schachteln oder Kästen an der Lieferstation laden.

2. Verfahren nach Anspruch 1, dadurch gekennzeichnet, daß die Schachteln oder Kästen zum Bilden eines Lieferstapels gestapelt werden, der eine bestimmte Anzahl von einen Stapelplatz der Kundenstation verbracht wird, daß der Stapel zu einer Wartestellung verschoben wird, und daß nachfolgende Schachteln oder Kästen zum Bilden eines zusätzlichen Stapels im Stapelplatz der Kundenstation gestapelt werden.

3. Verfahren nach Anspruch 1 oder 2, dadurch gekennzeichnet, daß die für jeden Kunden bestimmten Lieferstapel auf ihrem Transport für den Lieferungstransport mit Versendungshinweisen aufgrund der Bestellungsdaten versehen werden, die in den Packstationen (2) für die Erzeugnisarten bestätigt oder berichtigt sind.

4. Verfahren nach Anspruch 2, dadurch gekennzeichnet, daß die Schachteln oder Kästen durch die Fördermittel (3, 4, 5, 6) von den Packstationen (2) für die Erzeugnisarten zu den Kundenstationen (7) auf einem Niveau transportiert werden, das höher ist als das höchste Niveau, das durch den die vorgegebene Anzahl von Schachteln oder Kästen enthaltenden Lieferstapel erreicht wird, während sich dieser in der Kundenstation (7) befindet.

## Revendications

1. Procédé pour assembler en charges à livrer des marchandises qui arrivent sensiblement en continu et surtout simultanément de la fabrication sous forme de types de produits différents, en particulier denrées périssables, telles que produits de boulange, dans lequel en des postes d'emballage (2) chaque sorte de marchandises est emballée dans des boîtes de grandeur spécifiée conformément à des ordres de livraison passés par des clients individuels, caractérisé en ce qu'en chaque poste d'emballage (2) les boîtes sont emballées de manière commandée séquentiellement, que les boîtes sont transférées par des moyens transporteurs (3, 4, 5, 6) de chaque poste d'emballage à des postes de client (7) d'une manière commandée automatiquement qui adapte le transfert aux séquences d'emballage, que chaque poste de client est affecté à un certain client, et qu'en chaque poste de client les boîtes sont empilées en piles et que pendant quelles font partie desdites piles les boîtes sont guidées par des moyens mécaniques alors qu'elles sont en train d'être dirigées automatiquement sur un poste de livraison (10) pour être placées dans un ordre correspondant à la succession des clients tels qu'ils apparaissent sur les itinéraires de véhicules de livraison qui sont chargés des boîtes au poste de livraison.

2. Procédé selon la revendication 1, caractérisé en ce que les boîtes sont empilées pour constituer une pile de livraison contenant un nombre spécifié de boîtes, la pile étant placée en un emplacement d'empilage du poste de client, que la pile est décalée jusqu'en un emplacement d'attente, et que les boîtes ultérieures sont empilées pour constituer une pile supplémentaire à l'emplacement d'empilage du poste de client.

3. Procédé selon la revendication 1 ou 2, caractérisé en ce que les piles à livrer destinées à chaque client sont munies de bulletins d'expédition établis lors de leur transfert pour transport de livraison en fonction des données de la commande reconnues ou corrigées dans les postes d'emballage des sortes de produits (2).

4. Procédé selon la revendication 2, caractérisé en ce que les boîtes sont transférées par les moyens transporteurs (3, 4, 5, 6) des postes d'emballage de sortes de produit (2) aux postes de client (7) à un niveau plus élevé que le plus haut niveau atteint par la pile à livrer contenant le nombre de boîtes spécifié pendant qu'elle se trouve au poste de client (7).